# NEW EUROPEAN PATENT SPECIFICATION

(11) **EP 0 427 354 B2**
(45) Date of publication and mention of the opposition decision: **09.09.1998**
(45) Mention of the grant of the patent: 11.01.1995
(21) Application number: 90203138.4
(22) Date of filing: 26.04.1988
(51) Int. Cl.: G02B 6/44, G02B 6/52

(54) **Apparatus for introducing a cable into a cable guide tube**
Vorrichtung zum Einführen eines Kabels in ein Kabelumhüllungsschutzrohr
Dispositif pour introduire un câble dans un tube de protection

(30) Priority: 28.04.1987 NL 8701002
(43) Date of publication of application: 15.05.1991
(62) Divisional of application: 88200793.3
(73) Proprietor: Koninklijke PTT Nederland N.V., 2509 CH Den Haag (NL)
(72) Inventor: Griffioen, Willem, NL-2641 XJ Ter Aar (NL); de Jong, Cornelis Leendert, NL-2406 EA Alphen aan den Rijn (NL)

(56) References cited:
- EP-A- 0 108 590
- EP-B- 185 788
- WO-A-87/02572
- FR-A- 1 557 074
- GB-A- 1 144 505
- GB-A- 2 122 367
- GB-A- 2 171 218
- GB-A- 2 179 471
- GB-A- 2 192 168
- US-A- 3 465 941
- US-A- 4 469 262
- GAST Air Motors Brochure (1985)
- Installation of Optical Cables in Ducts by W. Griffioen, published by CIP-Gegevens Koninklijke Bibliotheek, Den Haag (ISBN 90 72125 37 1), frontispiece and pp. 54,133

## Description

### A. Background of invention

### 1. Field of the invention

The invention generally relates to an apparatus for introducing (instailing) cables, such as e.g. optical glass fibre cables, into a channelization system of guide tubes, in general designated as "ducts", which are disposed, as a rule in the ground, according to a predetermined arrangement. The present application is a division from the European patent application EP 0 292 037.

### 2. State of the art

For introducing a cable into a cable duct two kinds of techniques are known, which make use of the working of a compressed gas. A technique of the first kind, wherein a compressed gas is used for pressurising a pulling shuttle coupled to the front end of a cable in the duct is known from the United Kingdom patent application GB 2151414. This citation discloses an apparatus for introducing a cable into a cable duct from an inlet end towards an outlet end of said duct, while inserting a compressed gas into the duct in the same direction. This known apparatus is provided with cable advancing means including a hollow, substantially rectilinear cable lead-through channel with an entrance end and an exit end for leading in and leading out a cable which has to be introduced into the relevant duct. Said cable advancing means further include a gas channel, which debouches into the cable lead-through channel and via which compressed gas can be supplied to the cable lead-through channel. For operation the exit end of the lead-through channel has a sealed coupling with the inlet end of the duct. Compressed gas is supplied for pressurizing a pulling shuttle coupled to the front end of the cable in the duct such that pulling forces are exerted on the front end of the cable for advancing the cable in the duct. Because of the fact that the pulling forces exerted on the cable are concentrated at one point, the front end of the cable, generally only cables with rather limited diameter and length may be installed using this technique of the first kind. A technique of the second kind wherein a compressed gas is used for applying dragging forces on the cable in the duct, is known from the European patent application EP 0,108,590. This second citation discloses a similar apparatus for introducing a cable in a cable duct, of which the cable advancing means moreover include a set of wheels mounted opposite to each other and partly reaching into the lead-through channel, and serving to advance a cable, disposed between these wheels and touching them, in the direction of the exit end. This known technique of the second kind is meant for installing lightweight, flexible optical fibre cables. To this end the exit end of the cable lead-through channel is coupled to the inlet end of a relevant duct portion. When supplying the compressed gas a flow of gas will be caused in the cable lead-through channel and the following duct portion, which flow exerts a drag force working on a cable as far as it has been already introduced into the cable lead-through channel and the duct next to it, due to which such a cable will be dragged through the duct to its outlet end. The two drive wheels forming part of the cable advancing means of the known device serve to compensate the opposing forces exerted on the cable at the entrance end of the cable lead-through channel, which opposing forces are caused by the difference in pressure between the interior of the cable lead-through channel and its outer environment. Because of the fact that the drive wheels can compensate said opposing forces and therefore would automatically take up a fibre member fed into the apparatus, the apparatus is mentioned as to be suitable for use in a tandem arrangement.

These known techniques of both kinds are however not able to meet the need for the installation of much thicker, and consequently stiffer cables in ducts. The disclosed apparatus are not adapted for exerting extra pushing forces on the cable to be installed in its direction of advance for supporting the working of the compressed gas on the cable in the duct in order to install cables of greater length in one processing stroke. In addition the known apparatus of the first kind of techniques is totally unsuitable for tandem use. For example for such use no measures have been mentioned which prevent the strong flow of gas leaving the outlet end of a previous duct section for being harmful to the operating staff and for disturbing the feed of a cable into a next device in order to introduce the cable also in a next duct section. Also there is no teaching of measures to prevent for destruction of the cable being installed when temporarily or definitely the advancing of the cable in the previous or the next duct section slows down or even stagnates. Pneumatic motors and cylinders are known per se and have been used for cable tension and transport (see e.g. Fr-A-1 557 074 or EP-A-0 185 788)

### B. Summary of the invention

The object of the present invention is to provide for an apparatus, which does not have the drawbacks indicated above.

The invention to this effect provides an apparatus according to claim 1.

The use of a pneumatic cylinder/piston combination for operating the wheels warants for substantially constant transverse forces, which are consequently very accurately adjustable not exceeding the maximum permissible squeezing pressure of a used cable; the use of a pneumatic motor provides for an apparatus which is non-destructive to the cable when the introduction of the cable in the duct temporarily or definitely is slowing down or even stagnates; whereas the combination of these features are particularly advantageous when more than one apparatus according to the invention are used in a tandem arrangement. Because in such an arrangement the apparatus need hardly any human interference, since speed control of the consecutive apparatus happens in fact through the very cable being introduced.

Further prefered embodiments of the invention are summarized in the remaining subclaims and with their special advantages illucidated below.

### C. Brief description of the drawing

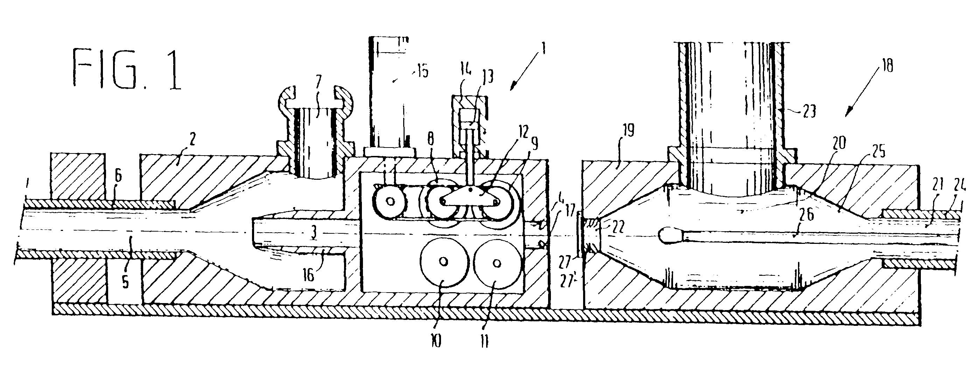

The invention will be further explained hereinafter with reference to the drawing in which
- Fig. 1: shows a diagrammatic cross-sectional view of an embodiment which is illustrative of an apparatus according to the invention.

### D. Detailed description of the figure

Figure 1 is illustrative of an embodiment of an apparatus according to the invention. More in particular figure 1 shows a diagrammatic cross-sectional view of a cable advancing unit in its generality designated by 1. This unit comprises a housing 2, in which a substantially rectilinear cable lead-through channel is formed, which channel has an inlet end 4 through which a cable can be led into the advancing unit, and an outlet end 5, which has been adapted to be coupled to a relevant duct 6, into which a cable has to be installed, while at the same time forming a gastight closing. An inlet tube debouching into the lead-through channel and meant to be connected to a source of compressed gas (a compressor which is not shown in the figure) is designated by 7. In the case of a usual flow resistance of the relevant duct portion and a conventional compressor with a capacity of 75 Itr/sec and a maximum working pressure of 7.5 bar (overpressure), a flow of compressed gas (flow of air) in the order of magnitude of 75 ltr/sec will stream via said inlet tube. A set of wheels 8, 9, 10 and 11 is pivotally mounted in a housing and partly reaches into the lead-through channel. The set of wheels 8 and 9 is supported by a frame 12, which is pivotally coupled to a piston rod of a piston 13, which is movably mounted in a pneumatic cylinder 14. As diagrammatically shown in figure 1, the two wheels 8 and 9 can be set turning via a transmission mechanism by means of a pneumatic motor 15, which is mounted on the housing. Opposite to the embouchure of the gas inlet tube the cable lead-through channel is bounded by a streamlined small pipe 16, which ensures that the course of a cable disposed in the lead-through channel will remain substantially rectilinear, in spite of the strong flow of compressed gas. In other words, the cable will be prevented from being blown to a "buckling" in that portion, which would seriously hinder the introduction of the cable into the duct. A cable led into the lead-through channel via the inlet opening 4 forms via a diagrammatically drawn washer 17 a gastight closing. In consequence of the compressed air supplied there will be a difference in pressure between the interior and the exterior of the housing. Owing to this a force working will be exerted on the cable disposed in the lead-through channel, which takes the opposite direction with regard to the desired direction of movement of this cable. When compressed air is supplied to the cylinder 14 and to the motor 15, this "oppositely directed" force working will be compensated. A pneumatic motor has the advantage that the driving couple provided by it is proportional to the pressure caused in the housing; moreover, when compressed air is supplied, a pneumatic motor can be slowed down to a standstill without harmful consequences, and also be kept in such a state (if desired for a long time). The latter is a particular advantage when several cable advancing units are used in series (or in tandem connection).

Within the scope of the present invention, however, the pneumatic motor is considerably more powerful than necessary for compensating the above-mentioned "oppositely directed" force working. Illustrative is e.g. a motor capable of providing a force working which is thrice as large as the force working necessary for the above-meant compensation. By means of a motor thus dimensioned it will be achieved that over a length area extending over a certain distance from the beginning of the relevant duct portion, a pushing force working is exerted on the cable disposed in the duct. In order to ensure that the pushing force working will not result in buckling in the duct it is essential that the relevant cable has a certain stiffness. The cables used in practice meet this requirement. In practical situations it has appeared that the length of the duct portion over which a cable can be installed by means of only one injection unit, can be extended by a factor of abt. two, when use is made of such a pushing force working. The speed at which the cable is introduced into a duct can be regulated by means of a pressure regulator (not shown in figure 1). To promote the engagement between the wheels and the cable to be moved on by them, each of these wheels has a hollow tread, which is provided with transversal knurls. The advantage of such a construction is that said wheels cannot get filled up with material from the cable sheath and pollutants, if any, taken along by the cable, and that slipping, even when the cable sheath is covered with a lubricant, will be effectively hindered.

In the embodiment represented in figure 1 two driven wheels and two "counter pressure" wheels are used. However, if need be, also an embodiment with one respectively more than two driven wheels and one respectively more than two counter pressure wheels can be made use of. In the latter case it is advisable to use at least two pneumatic cylinders, each of the pneumatic cylinders operating two wheels at most, which are in this case mounted in a frame, which is pivotally coupled to the relevant piston rod. The pneumatic cylinder/piston combination serving to cause the pressing working has the advantage that in the case of a certain supply of compressed air the pressure force working exerted on the cable will be substantially constant. That means that notwithstanding variations in the thickness of the cable, this pressure force will remain constant. Moreover, an upper limit corresponding to the maximum working pressure of the supply compressor of 7.5 bar, has been set to the pressure force working exerted. This means that the permissible squeezing pressure of a cable used in practice will not be exceeded when using the pneumatic cylinder/piston combination.

By means of the above-described construction the motor can be brought to a standstill by slowing down and bringing to a standstill the cable moved on by that motor.

Figure 1 also shows a coupling or closing unit 18. Such a unit comprises a housing 19, which leaves space to a room 20, which is connected to the outer environments via an inlet opening 21, an outlet opening 22 and a compressed gas outlet pipe 23. The inlet end has been adapted to form a gastight coupling with the final part of a duct portion 24, at the beginning of which use is made of a cable advancing unit similar to the one shown in figure 1. The velocity at which the compressed air flows into the room 20 via the inlet end 21 is substantially determined by the magnitude of the flow of compressed air. In the case of values of abt. 7.5 bar and 75 ltr/sec this velocity will be in the order of magnitude of 150 m/sec for a duct with an inner diameter of 26 mm. For reasons of security and for the protection of an advancing unit located near the outlet opening 22 the compressed air outlet pipe has been designed in such a way that the compressed air supplied will be slowed down, via a widening initial part 25, without causing whirls, and led away, via this outlet pipe 23, to a place which is safe for the operating staff. As an alternative said outlet pipe can have been dimensioned in such a way that the velocity at which the compressed air streams out has been reduced to a safe value. The cable 26 installed in the duct portion 24 can be led to the next cable advancing unit, in this case the advancing unit 1, via the outlet opening 22, which is provided with a lining 27' capable of slowing down quick particles which may come along with the cable and/or the flow of compressed gas. As a rule the opening 22 is closed by means of a valve 27 pivotally mounted on the housing 19, which valve will attach itself firmly to the outside of the housing due to the acceleration of the flow of air there, when there is no cable at that place, in such a way that the valve will offer protection against the particles moving on at a high speed. By means of the cable supplied this valve can be opened, in which case the lining 27' will then fulfil the function of the valve 27. After that this cable can be installed via the advancing unit 1 into the duct portion 6, which follows after the duct portion 24. For that purpose the two advancing units have to work in series or in tandem. In connection with such a tandem working each cable advancing unit and coupling or closing unit which has to be used in that process, has been designed as two parts which are detachably fixed to each other.

The special construction of the wheels described in what precedes makes it possible that a cable disposed between them will be moved on effectively without causing damage to the cable sheath, and no matter whether such a cable sheath is covered with a lubricant or not. The latter is an advantage when the tandem method is employed. For in that case a cable provided with a lubricant is supplied to an advancing unit. For a further improvement of the working of the wheels it may be advisable to provide the outer sheath of a cable to be installed with corresponding transversal knurls. These knurls may also result in an enhancement of the dragging working caused by the flow of compressed gas.

## Claims

1. Apparatus for introducing a cable into a cable duct from an inlet end towards an exit end of said duct by inserting a compressed gas into the duct in the same direction, said apparatus comprising
cable advancing means including
- a hollow, substantially rectilinear cable leadthrough channel (3) with an entrance end (4) and an exit end (5) for leading in and leading out a cable (26) which is to be introduced into the relevant duct (6),
- at least one pair of wheels (8, 10; 9, 11) mounted opposite to each other for advancing a cable (26) disposed between these wheels in the direction of the outlet end (21) of a relevant duct, the wheels being capable of being pressed against the cable for exerting transverse forces on the cable, and
- a motor (15) coupled to at least one of said wheels for providing a driving couple to it, cable advancing forces being exerted by the wheels on the cable (26) as a consequence of the cooperative effect of the driving couple and the transverse forces, and
gas inserting means comprising a gas channel (7), which debouches into the cable lead-through channel (3) and which is adapted for inserting compressed gas into said lead-through channel (3) between said wheels and the exit end (5) of said lead-through channel (3),
+ a piston (13) is provided, which wherein is movably mounted in a pneumatic cylinder (14) and which is also coupled to at least one of said wheels (8; 9), in such a way that when compressed gas is supplied to the pneumatic cylinder (14), said transverse forces will be exerted on a cable (26) disposed between the wheels (8, 10; 9, 11), and in that
+ the motor (15) is a pneumatic motor capable of providing said driving couple, which is larger than the driving couple which has to act on the cable (26) to compensate for the pressure difference which exists at the inlet end of the duct between the pressure inside and the pressure outside the cable lead-through channel (3) as a consequence of said inserting of the compressed gas via said gas channel into said cable lead-through channel;
the apparatus further including a coupling unit (18) comprising
- means for coupling said unit (18) to the outlet end (21) of a duct (24) in a gastight way;
- means (23) for diverting a flow of gas from the direction of a cable (26), which flow may leave said outlet end (21) when said unit is coupled to said outlet end of said duct in which a cable is being introduced;
- means (27') for slowing down particles, which may be carried along by said gas flow;
- means for leading a cable (26) which is being introduced in the direction of the entrance end (4) of said cable lead-through channel (3);
the coupling unit further (18) comprising
- a mainly hollow housing (19),
- a duct inlet opening in said housing for receiving and coupling the outlet end of a cable duct (24);
- an outlet pipe (23), extending from the interior of said housing (19) through said housing, which pipe is suitable for leading away from said housing a high velocity flow of compressed gas, which flows from the outlet end of the cable duct section (24) into the housing as a consequence of the insertion of compressed gas at its inlet end, in a controlled manner; and
- a cable outlet opening (22) in said housing mainly directly across from the duct inlet opening, which cable outlet opening is provided with a cover valve (27) pivotally mounted on the outside of the housing (19), which cover valve (27) is capable of closing firmly said outlet opening (22), by attaching itself firmly to the outside of the housing due to the acceleration of the flow of air there, when there is no cable at that place, and which cable outlet opening is further provided with a lining (27') capable of slowing down quick particles dragged along with the high velocity flow of compressed gas and/or a cable (26) being introduced in said duct section (24), the interior of said housing having at least partly a profile such as to lead the front end of a cable (26) which is being introduced in the direction of said cable outlet opening (22).

2. Apparatus according to claim 1, characterized in that the pneumatic motor (15) and the pneumatic cylinder (14) are adapted to be coupled to a common source of compressed gas.

3. Apparatus according to claim 2, characterized in that said gas channel (7) is adapted to be coupled together with the pneumatic motor (15) and the pneumatic cylinder (14) to a common source of compressed gas, and in that between the connection for this source of compressed gas and the pneumatic motor a reducing valve has been placed for controlling the speed of the motor.

4. Apparatus according to claim 1, 2, or 3, characterized in that two wheels (8, 9) are mounted in a frame (12), which is pivotally mounted to said piston (13), which wheels can turn and are adapted to co-operate with two wheels (10, 11) disposed opposite to the former wheels and which partly reach into the cable lead-through channel, and the pneumatic motor is coupled by a driving connection to one of the pairs of wheels.

5. Apparatus according to one of the claims 1 to 4, characterized in that means (16) are disposed between the wheels and the exit end (5), and also at the place where the gas channel (7) debouches into the cable lead-through channel (3), which means are adapted to prevent the flow of gas supplied via the gas channel (7) from having a negative effect on the working of said pushing forces.

6. Apparatus according to one of the claims 1 to 5, characterized in that the wheels have a hollow tread, the tread being provided with knurls substantially running parallel to the axis of rotation of the relevant wheel.

7. Apparatus according to one of the claims 1 to 6, characterized in that cable advancing means (1) are composed of two parts which are detachably fixed to each other, in such a way that said means can be removed from a cable extending through the same.

## Patentansprüche

1. Vorrichtung zum Einführen eines Kabels in ein Kabelrohr von einem Einführende gegen ein Austrittsende dieses Rohrs, indem ein Druckgas in der gleichen Richtung in das Rohr eingesetzt wird, wobei die Vorrichtung folgende Elemente umfasst: Kabelvortriebsmittel, umfassend einen hohlen, im wesentlichen geradlinigen Kabeldurchführkanal (3) mit einem Eingangsende (4) und einem Ausgangsende (5) zum Einführen und Ausführen eines Kabels (26), das in das relevante Rohr (6) eingeführt werden soll, mindestens ein Paar Räder (8, 10; 9, 11), die einander gegenüberliegend montiert sind, um ein zwischen diesen Rädern angeordnetes Kabel (26) in der Richtung des Austrittsendes (21) eines relevanten Rohrs vorzutreiben, wobei die Räder gegen das Kabel gedrückt werden können, um Querkräfte auf das Kabel auszuüben, und einen Motor (15), der mit mindestens einem der Räder gekuppelt ist, um eine Treibkupplung zu liefern, wobei von den Rädern Kabelvortriebskräfte auf das Kabel (26) ausgeübt werden als Folge der Zusammenwirkung der Treibkupplung und den Querkräften, und Gaseinsetzmittel, umfassend einen Gaskanal (7), der in den Kabeldurchführkanal (3) einmündet, und der zum Einsetzen von Druckgas in den Durchführkanal (3) zwischen den Rädern und dem Ausgangsende (5) des Durchführkanals (3) ausgebildet ist,
wobei ein Kolben (13) vorgesehen ist, der in einem bewegbaren pneumatischen Zylinder (14) montiert ist, und der ebenfalls mit mindestens einem der Räder (8;9) derart gekuppelt ist, dass bei einer Belieferung des pneumatischen Zylinders (14) mit Druckgas Querkräfte auf ein zwischen den Rädern (8, 10; 9, 11) angeordnetes Kabel (26) ausgeübt werden, und wobei der Motor (15) ein pneumatischer Motor ist, der die Treibkupplung bilden kann, die grösser ist als die Treibkupplung, die auf das Kabel (26) wirken muss, um den Druckunterschied zu kompensieren, der am Einführende des Rohrs zwischen dem Druck innerhalb und dem Druck ausserhalb des Kabeldurchführkanals (3) entsteht als Folge des Einsetzens des Druckgases, über den Gaskanal, in den Kabeldurchführkanal,
wobei die Vorrichtung weiter eine Kupplungseinheit (18) aufweist, umfassend: Mittel zum gasdichten Kuppeln der Einheit (18) mit dem Austrittsende (21) eines Rohrs (24); Mittel (23) zum Umleiten eines Gasflusses von der Richtung eines Kabels (26), wobei dieser Fluss das Austrittsende (21) verlassen kann, wenn die Einheit an das Austrittsende des Rohrs gekoppelt ist, in das ein Kabel eingeführt werden soll; Mittel (27') zum Abbremsen von Partikeln, die dem Gasfluss entlang befördert werden können; Mittel zum Führen eines Kabels (26), das in die Richtung des Eingangsendes (4) des Kabeldurchführkanals (3) eingeführt wird, und
wobei die Kupplungseinheit (18) weiterhin folgende Elemente umfasst: ein im wesentlichen hohles Gehäuse (19); eine Rohreintrittsöffnung in das Gehäuse zum Aufnehmen und Kuppeln des Austrittsendes eines Kabelrohrs (24); ein Austrittsrohr (23), das sich aus dem Innern des Gehäuses (19) durch das Gehäuse hindurch erstreckt, wobei sich dieses Rohr dazu eignet, einen Hochgeschwindigkeits-Druckgasfluss vom Gehäuse wegzuleiten, der vom Austrittsende des Kabelrohrabschnitts (24) in das Gehäuse strömt als Folge des gesteuerten Einsetzens von Druckgas bei dessen Eintrittsende; und eine Kabelaustrittsöffnung (22) im Gehäuse, die sich im wesentlichen direkt gegenüber der Rohreintrittsöffnung befindet, wobei diese Kabelaustrittsöffnung mit einem Abdeckventil (27) versehen ist, das schwenkbar an der Aussenseite des Gehäuses (19) montiert ist, wobei das Abdeckventil (27) die Austrittsöffnung (22) fest verschliessen kann, indem es sich fest an die Aussenseite des Gehäuses auf Grund der Beschleunigung des Gasflusses dort festsetzt, wenn an diesem Ort kein Kabel vorhanden ist, und wobei diese Kabelaustrittsöffnung weiter mit einer Auskleidung (27') versehen ist, die schnelle Partikel abbremsen kann, welche mit dem Hochgeschwindigkeits-Druckgasfluss und/oder einem Kabel (26), das in den Rohrabschnitt (24) eingeführt wird, mitgerissen werden, wobei das Innere des Gehäuses mindestens teilweise ein Profil aufweist, derart, dass das Vorderende eines eingeführten Kabels (26) in die Richtung der Kabelaustrittsöffnung (22) geführt wird.

2. Vorrichtung nach Anspruch 1, dadurch gekennzeichnet, dass der pneumatische Motor (15) und der pneumatische Zylinder (14) derart ausgebildet sind, dass sie an eine gemeinsame Druckgasquelle gekuppelt werden können.

3. Vorrichtung nach Anspruch 2, dadurch gekennzeichnet, dass der Gaskanal (7) derart ausgebildet ist, dass er zusammen mit dem pneumatischen Motor (15) und dem pneumatischen Zylinder (14) an eine gemeinsame Druckgasquelle gekuppelt werden kann, und dass zwischen der Verbindung für diese Druckgasquelle und dem pneumatischen Motor ein reduzierendes Ventil angeordnet ist, um die Geschwindigkeit des Motors zu steuern.

4. Vorrichtung nach Anspruch 1, 2 oder 3, dadurch gekennzeichnet, dass zwei Räder (8, 9) in einem Rahmen (12) montiert sind, der schwenkbar am Kolben (13) angebracht ist, wobei sich die Räder drehen können und derart ausgebildet sind, dass sie mit zwei Rädern (10, 11) zusammenwirken können, die gegenüber den vorherigen Rädern angeordnet sind, und die teilweise in den Kabeldurchführkanal hineinreichen, und wobei der pneumatische Motor durch eine Treibverbindung mit einem der Räderpaare gekoppelt ist.

5. Vorrichtung nach einem der Ansprüche 1 bis 4, dadurch gekennzeichnet, dass Mittel (16) zwischen den Rädern und dem Ausgangsende (5) angeordnet sind, und zwar ebenfalls an der Stelle, an welcher der Gaskanal (7) in den Kabeldurchführkanal (3) einmündet, wobei diese Mittel derart ausgebildet sind, dass sie verhindern, dass der über den Gaskanal (7) zugeführte Gasfluss eine negative Wirkung auf die Wirkung der Stosskräfte hat.

6. Vorrichtung nach einem der Ansprüche 1 bis 5, dadurch gekennzeichnet, dass die Räder eine hohle Lauffläche aufweisen, wobei die Lauffläche mit Rändelungen versehen ist, die im wesentlichen parallel zur Drehachse des relevanten Rades verlaufen.

7. Vorrichtung nach einem der Ansprüche 1 bis 6, dadurch gekennzeichnet, dass sich die Kabelvortriebsmittel (1) aus zwei Teilen zusammensetzen, die entfernbar miteinander befestigt sind, und zwar derart, dass diese Mittel von einem Kabel entfernt werden können, das sich durch diese Mittel erstreckt.

## Revendications

1. Appareil pour introduire un câble dans un conduit d'une extrémité d'entrée vers une extrémité de sortie dudit conduit en envoyant un gaz sous pression dans le conduit dans le même sens, ledit appareil comprenant :
des moyens d'avancée de câble incluant :
- un canal de transit de câble (3) sensiblement rectiligne, creux, avec une extrémité d'entrée (4) et une extrémité de sortie (5), pour y faire entrer et en faire sortir un câble (26) qui doit être introduit dans le conduit (6) en question ;
- au moins une paire de roues (8, 10 ; 9, 11), montées en face l'une de l'autre, pour faire avancer un câble (26) disposé entre ces roues dans le sens vers l'extrémité de sortie (21) du conduit en question, les roues pouvant être poussées contre le câble pour exercer des forces transversales sur le câble ; et
- un moteur (15) accouplé à au moins l'une desdites roues pour lui appliquer un couple d'entraînement, les roues exerçant sur le câble (26) des forces d'avancée de câble, comme conséquence de l'effet conjoint du couple d'entraînement et des forces transversales ; et
des moyens d'introduction de gaz incluant un canal de gaz (7) qui débouche dans le canal de transit de câble (3) et qui est conçu pour introduire du gaz sous pression dans ledit canal de transit (3) entre lesdites roues et l'extrémité de sortie (5) dudit canal de transit (3) ;
dans lequel :
+ il est prévu un piston (13) qui est monté de façon mobile dans un vérin pneumatique (14) et qui est également accouplé à au moins l'une desdites roues (8 ; 9) de telle façon que lorsque du gaz sous pression est délivré au vérin pneumatique (14) des forces transversales seront exercées sur un câble (26) disposé entre les roues (8, 10 ; 9, 11) ; et dans lequel :
+ le moteur (15) est un moteur pneumatique capable d'appliquer ledit couple d'entraînement qui est plus grand que le couple d'entraînement qui doit agir sur le câble (26) pour compenser la différence de pression, qui existe à l'extrémité d'entrée du conduit, entre la pression intérieure et la pression extérieure du canal de transit de câble (3), comme conséquence de ladite introduction du gaz sous pression par ledit canal de gaz dans ledit canal de transit de câble ;
l'appareil incluant en outre un module de raccordement (18) comprenant :
- des moyens pour raccorder ledit module (18), d'une façon étanche aux gaz, à l'extrémité de sortie (21) d'un conduit (24) ;
- des moyens (23) pour dévier un écoulement de gaz de la direction d'un câble (26), lequel écoulement peut quitter ladite extrémité de sortie (21) lorsque ledit module est raccordé à ladite extrémité de sortie dudit conduit dans lequel un câble est en cours d'introduction ;
- des moyens (27') pour ralentir des particules, qui pourraient être transportées par ledit écoulement de gaz ;
- des moyens pour conduire un câble (26) en cours d'introduction dans la direction de l'extrémité d'entrée (4) dudit canal de transit de câble (3) ;
le module d'accouplement (18) comprenant en outre :
- un carter principalement creux (19);
- une ouverture d'entrée de conduit dans ledit carter pour recevoir, et pour se raccorder à, l'extrémité de sortie d'un conduit de câble (24);
- un tuyau de sortie (23), s'étendant à partir de l'intérieur dudit carter (19) à travers ledit carter, lequel tuyau est approprié pour éloigner dudit carter, d'une manière maîtrisée, un écoulement de gaz sous pression à grande vitesse, qui s'écoule à partir de l'extrémité de sortie de la section de conduit de câble (24) dans le carter comme conséquence de l'introduction de gaz sous pression à son extrémité d'entrée ; et,
- une ouverture de sortie de câble (22) dans ledit carter, principalement dirigée transversalement par rapport à l'ouverture d'entrée de conduit, laquelle ouverture de sortie de câble est pourvue d'une valve couvercle (27) montée de façon pivotante sur l'extérieur du carter (19), laquelle valve couvercle (27) est capable de fermer solidement ladite ouverture de sortie (22), en se fixant fermement à l'extérieur du carter en raison de l'accélération de l'écoulement d'air qui s'y produit, lorsqu'il n'y a pas de câble à cet endroit, et laquelle ouverture de sortie de câble est en outre pourvue d'une garniture (27') capable de ralentir des particules rapides entraînées en même temps que l'écoulement de gaz sous pression à grande vitesse et/ou un câble (26) en cours d'introduction dans ladite section de conduit (24), l'intérieur dudit carter ayant au moins partiellement un profil propre à conduire l'extrémité avant d'un câble (26), qui est en cours d'introduction, dans la direction de ladite ouverture de sortie de câble (22).

2. Appareil selon la revendication 1, caractérisé en ce que le moteur pneumatique (15) et le vérin pneumatique (14) sont conçus pour être raccordés à une source commune de gaz sous pression.

3. Appareil selon la revendication 2, caractérisé en ce que ledit canal de gaz (7) est conçu pour être raccordé, en même temps que le moteur pneumatique (15) et le vérin pneumatique (14), à une source commune de gaz sous pression, et en ce qu'entre le raccordement à cette source de gaz sous pression et le moteur pneumatique, une soupape de réduction a été placée pour commander la vitesse du moteur.

4. Appareil selon la revendication 1, 2, ou 3, caractérisé en ce que deux roues (8, 9) sont montées dans un bâti (12), qui est monté de manière pivotante sur ledit piston (13), lesquelles roues peuvent tourner et sont conçues pour coopérer avec deux roues (10, 11) disposées en face des premières roues et qui pénètrent partiellement dans le canal de transit de câble, et en ce que le moteur pneumatique est accouplé par une liaison d'entraînement à l'une des paires de roues.

5. Appareil selon l'une des revendications 1 à 4, caractérisé en ce que des moyens (16) sont disposés entre les roues et l'extrémité de sortie (5) et également à l'endroit où le canal de gaz (7) débouche dans le canal de transit de câble (3), lesquels moyens sont conçus pour empêcher l'écoulement de gaz délivré par le canal de gaz (7) d'avoir un effet négatif sur l'action desdites forces de poussée.

6. Appareil selon l'une des revendications 1 à 5, caractérisé en ce que les roues ont une gorge creuse, la gorge étant pourvue de stries s'étendant sensiblement parallèlement à l'axe de rotation de la roue en question.

7. Appareil selon l'une des revendications 1 à 6, caractérisé en ce que les moyens d'avancée de câble (1) sont composés de deux parties qui sont fixées l'une à l'autre de manière démontable, de telle façon que lesdits moyens puissent être retirés d'un câble qui les traverse.
